# EUROPEAN PATENT SPECIFICATION

(11) **EP 3 601 993 B1**
(45) Date of publication and mention of the grant of the patent: **12.07.2023**
(21) Application number: 18775882.6
(22) Date of filing: 30.03.2018
(51) Int. Cl.: G01N 1/02, G01N 1/08, B63C 11/52, B63G 8/00

(54) **UNDERWATER SAMPLING DEVICES AND METHODS THEREOF**
UNTERWASSERPROBENENTNAHMEVORRICHTUNGEN UND VERFAHREN DAFÜR
DISPOSITIFS D'ÉCHANTILLONNAGE SOUS-MARIN ET PROCÉDÉS ASSOCIÉS

(30) Priority: 31.03.2017 US 201762479501 P
(43) Date of publication of application: 05.02.2020
(73) Proprietor: Cellula Robotics, Ltd., Burnaby, B.C. V5J 5J3 (CA)
(72) Inventor: JACKSON, James Eric, New Westminster, BC V3L 2R8 (CA); WOODROFFE, Adrian, Burnaby, BC V5J 5J3 (CA); DOROUDGAR, Sina, Coquitlam, BC V3K 6C9 (CA); PRUNIAUNU, Paul, North Vancouver, BC V7N 1RA (CA)
(74) Representative: Platzöder, Michael Christian
(86) International application number: PCT/IB2018/000412
(87) International publication number: WO 2018/178768

(56) References cited:
- WO-A1-2014/131085
- WO-A1-2015/044667
- KR-B1- 101 515 536
- US-A1- 2014 144 255
- US-B1- 6 463 801

## Description

### CROSS REFERENCE TO RELATED APPLICATIONS

This application claims priority to United States Provisional Application 62/479,501, filed on March 31, 2017.

### FIELD

Example embodiments relate to underwater sampling devices, in particular, sampling devices for underwater vehicles, and methods thereof.

### BACKGROUND

Underwater sampling devices are used in many applications including but not limited to soil collection, biological sampling, etc. Some of these sampling devices are designed for use in underwater environments, for example, for use in underwater vehicles such as autonomous underwater vehicles (AUVs) and remotely operated underwater vehicles (ROVs). From the prior art the document US 6,463,801 B1 is known, which discloses a system for measuring a soil characteristic beneath the sea, in particular a deepwater suction caisson based testing system. The system comprises a seabed unit, a support ship, and a remotely operated vehicle. The seabed unit has a removable thrusting unit. Thereby the seabed unit is lowered from the support ship by a wireline winch to the seafloor. A caisson on the seabed unit is used to secure the seabed unit to the seafloor. The remotely operated vehicle then inserts the cone rod measurement device into a upper thruster unit of the seabed unit. The thruster unit has a jacking mechanism for inserting the cone rod into the soil of the soil of the seafloor.

### BRIEF DESCRIPTION OF THE DRAWINGS

The present disclosure is described in conjunction with the appended figures, which are not necessarily drawn to scale:
Fig. 1 illustrates a perspective view of an underwater vehicle according to at least one example embodiment;
Fig. 2 illustrates a partial cut-out side view of the underwater vehicle of Fig. 1 according to at least one example embodiment;
Fig. 3A illustrates a perspective view of a sampling device according to at least one example embodiment;
Fig. 3B illustrates another perspective view of the sampling device in Fig. 3A;
Fig. 3C illustrates a schematic top view of the support surface in Figs. 3A and 3B according to at least one example embodiment;
Fig. 3D illustrates a side view of the sampling device in Fig. 3A according to at least one example embodiment;
Fig. 3E illustrates another side view of the sampling device in Fig. 3A according to at least one example embodiment;
Fig. 3F illustrates a top view of the sampling device in Fig. 3A according to at least one example embodiment;
Fig. 3G illustrates a clutch mechanism of the sampling device in Figs. 3A-3F according to at least one example embodiment;
Fig. 3H illustrates a clutch mechanism of the sampling device in Figs. 3A-3F according to at least one example embodiment;
Fig. 4A illustrates deployment and anchoring of the sampling device of Figs. 3A-3E according to at least one example embodiment;
Fig. 4B illustrates the anchored the sampling device of Fig. 4A according to at least one example embodiment; and
Fig. 5 illustrates a method according to at least one example embodiment.

### DETAILED DESCRIPTION

Example embodiments are directed to underwater vehicles and sampling devices for underwater vehicles that enable efficient sample collection as well as reliable anchoring capability.

Example embodiments include an AUV with an umbilical reel and anchor device (or cone penetrometer test (CPT) payload or sampling device). An umbilical cable of the umbilical reel is connected to the anchor device. In operation, the umbilical reel raises and lowers the anchor device through payload doors of the AUV.

Example embodiments may include deploying the anchor device to a resting surface, such as a seabed or other underwater floor. Here, it should be understood that the anchor device is a suction anchor. At the seafloor, pump(s) onboard the anchor device suck water from the anchor caisson (or anchor suction chamber), forcing the anchor device into the seafloor. At the desired penetration level, valve(s) seal in the anchor caisson, forming a suction anchor. The AUV is now tethered to the anchor device. The AUV adjusts to be positively buoyant and can turn off thrusters to save power while at anchor.

To release the anchor device from the floor, the valve(s) on the suction anchor assembly open and the pump(s) reverse flow to force water into the caisson and in turn, forcing the caisson out of the seafloor. The anchor device is winched back into the AUV by the umbilical reel. The AUV includes an emergency tether cutter that can release the umbilical cable and allow the AUV to release from the anchor device if desired (e.g., in an emergency).

An example structure of the anchor device includes a water suction tube and suction chamber for anchoring and releasing the anchor device to and from the seafloor.

In addition to anchoring the AUV to the seafloor, example embodiments provide for the anchor device to have the ability to collect samples while anchored. For example, the anchor device is used as a platform to conduct soil investigations, such as Cone Penetrometer Test (CPT) or core sampling through various tools. The anchor device provides an autonomously deployed base on the seafloor against which ground sampling tools can react. The CPT system is shown as an example. In this case, a coil tube system can be pushed into the seafloor, reacting against the base of the anchor device. Alternative tools could include but are not limited to, piston samplers and rotary coring samplers.

The anchor device includes other elements such as a lift point to connect to the umbilical cable, a water pump and a corresponding suction tube to control anchoring operations. To control sampling operations, the anchor device includes a coil tubing assembly and a coil tubing winch to coil the coiled tube of the CPT system. The anchor device further includes a payload housing for storing seafloor samples, a sampling tool (e.g., CPT tool), and a drive assembly and one or few sets of a guide roller to move and/or guide the sampling tool. The anchor device includes one or more motors to drive the above described pump and sampling tool. Although not explicitly shown, it should be understood that additional pumps, suction tubes, motors and/or sampling tools may be provided on the anchor device based on design preferences.

In view of the above, it should be understood that example embodiments provide for an AUV that includes an anchor device capable of anchoring the AUV using suction and collecting samples from the area to which the anchor device is anchored. Although example embodiments have been described in terms of an anchor device for an AUV, the anchor device may be employed to anchor any type of watercraft or waterborne device. These and other advantages will be apparent from the description of example embodiments.

For deployment, the AUV and/or the anchor device may have an RS232 and Ethernet communication capability to a host for operation and status monitoring. Using on board processor and computer readable medium comprising instructions, the processor can execute various AUV protocols, which may be user selected prior to deployment or during deployment. The on board processing capability and communications interface can allow remote status monitoring while connected.

The AUV can have multiple external environmental sensors with RS232 communications capability.

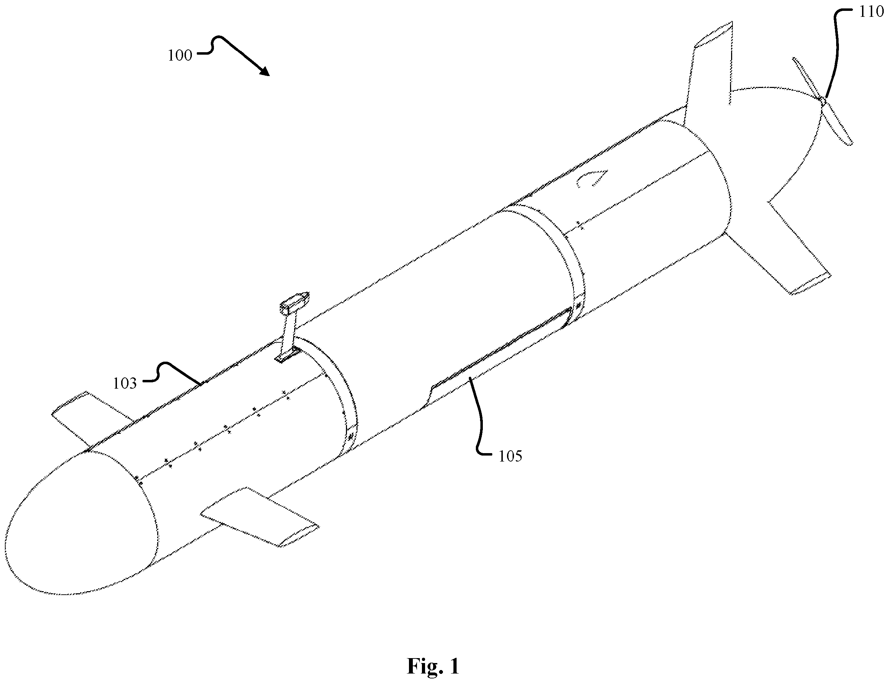

Fig. 1 illustrates a perspective view of an underwater vehicle 100 according to at least one example embodiment. As shown in Fig. 1, the underwater vehicle 100 includes a body 103. The body 103 includes a payload section 105 on a bottom portion thereof with doors that open to allow insertion/deployment of a payload. The body 103 includes one or more devices attached to the body 103 and that control the underwater vehicle 100. Here, the one or more devices for controlling the underwater vehicle 100 may include one or more motors with associated propeller(s) as well as fixed and/or pivoting fins to control pitch, roll, and yaw of the underwater vehicle 100. According to at least one example embodiment, the underwater vehicle 100 is an AUV that includes one or more onboard components to control autonomous operation, such as one or more processors (e.g., microprocessors), navigation equipment (e.g., sonar), etc. In at least one example embodiment, the underwater vehicle 100 is an ROV, controllable (wired or wirelessly) remotely by an operator.

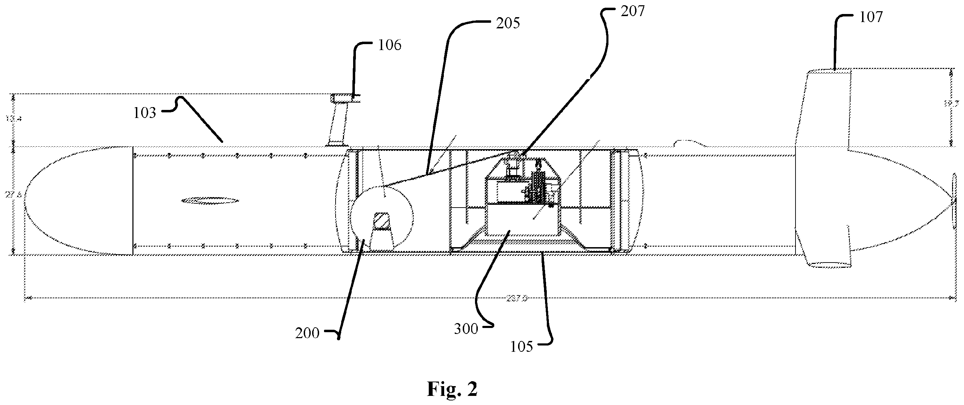

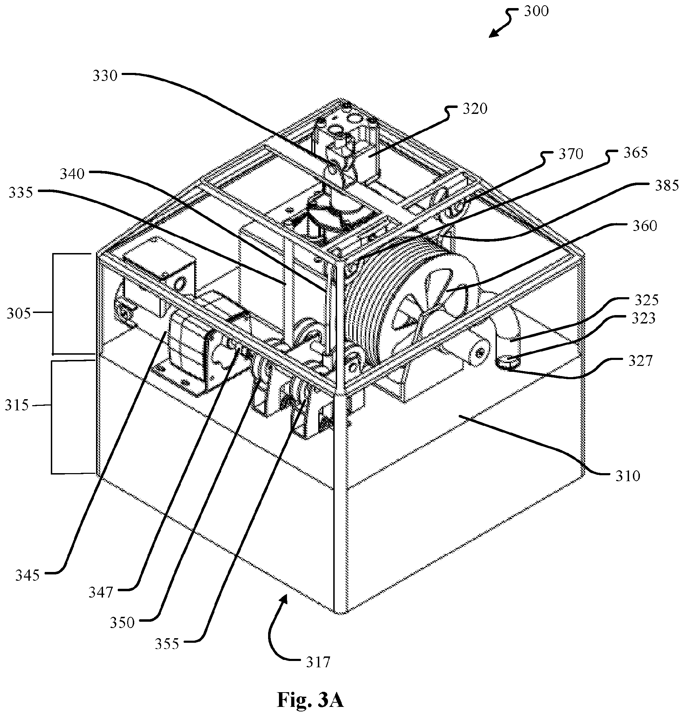

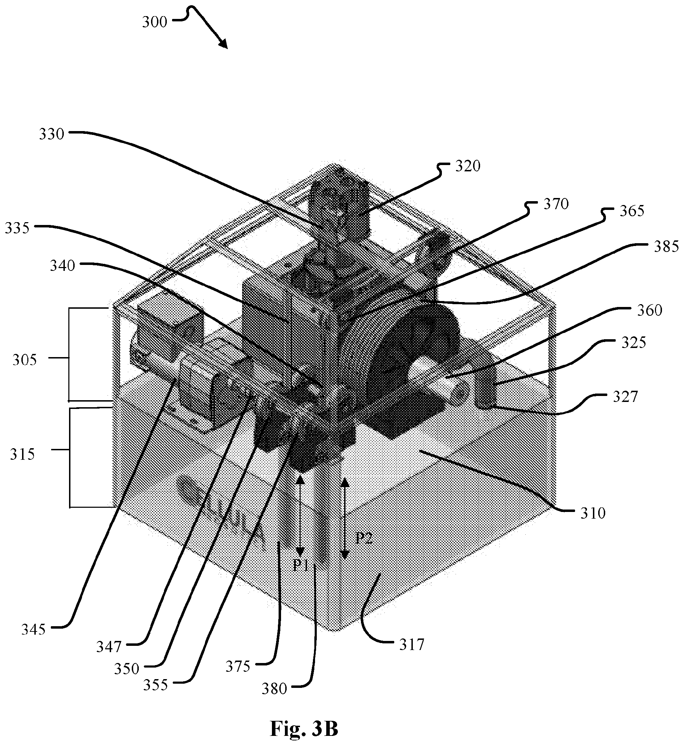

Fig. 2 illustrates a partial cut-out side view of the underwater vehicle 100 of Fig. 1 according to at least one example embodiment. In more detail, Fig. 2 shows details related to a payload insertable/deployable from the payload section 105. As shown, the payload section 105 may include an umbilical reel 200 with an associated umbilical cable 205 that runs through a pulley 207 for connection to a payload for raising and lowering the payload to/from the payload section 105. The umbilical cable 205 may include one or more electrical and/or optical cables to allow the underwater vehicle 100 to communicate with the sampling device 300 according one or more protocols (e.g., RS232 protocol). Such communication may include but is not limited to data transfer and control of components on the sampling device 300. The umbilical reel 200 may be fixed to an inner (e.g., inner-bottom) surface of the payload section 105 or other suitable mounting surface within the body 103. In at least one example embodiment, the payload is a deployable sampling device 300 for collecting underwater samples (e.g., soil samples) and configured to be housed in the payload section 105. The sampling device 300 will be discussed in more detail below with reference to Figs. 3A-3E.

Still with reference to Fig. 2, the body 103 of the underwater vehicle 100 may be about 237 inches long. A tubular section of the body 103 may be about 27.6 inches in diameter. A height of a first fin 106 on the body 103 may be about 19.7 inches. A height of a second fin 107 on the body 103 may be about 13.4 inches. However, example embodiments are not limited to the dimensions shown in Fig. 2 and may vary according to design preferences.

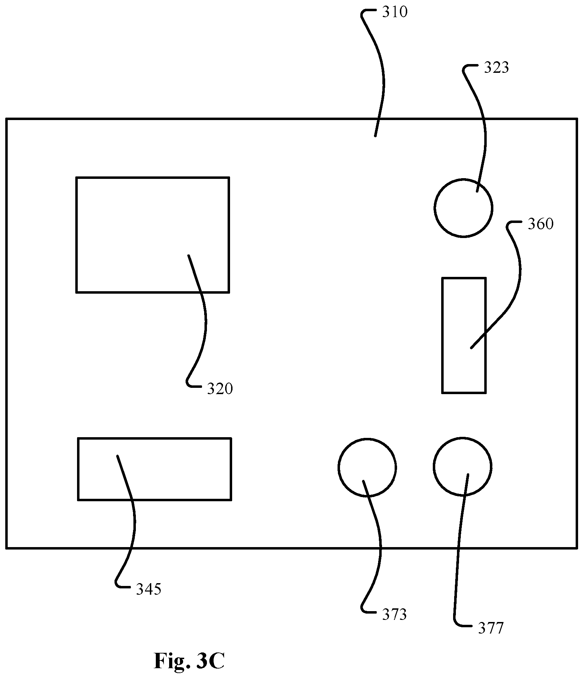

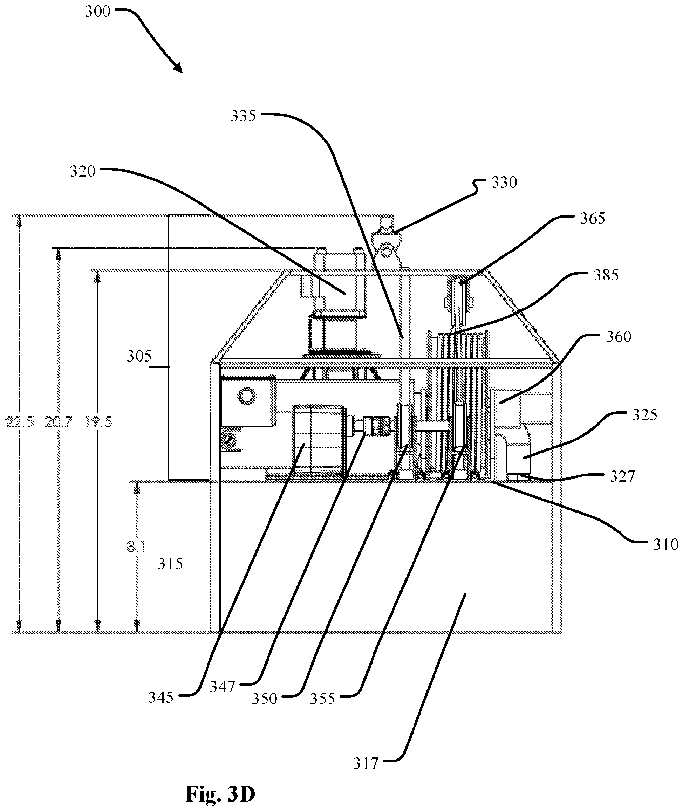

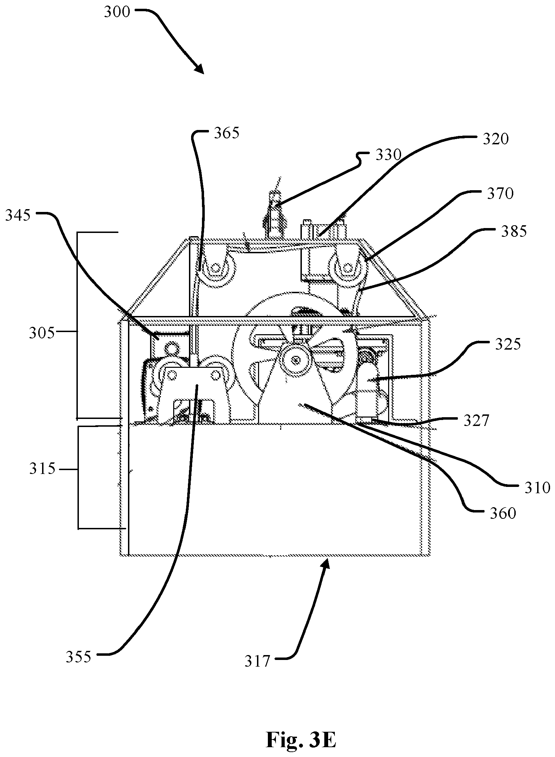

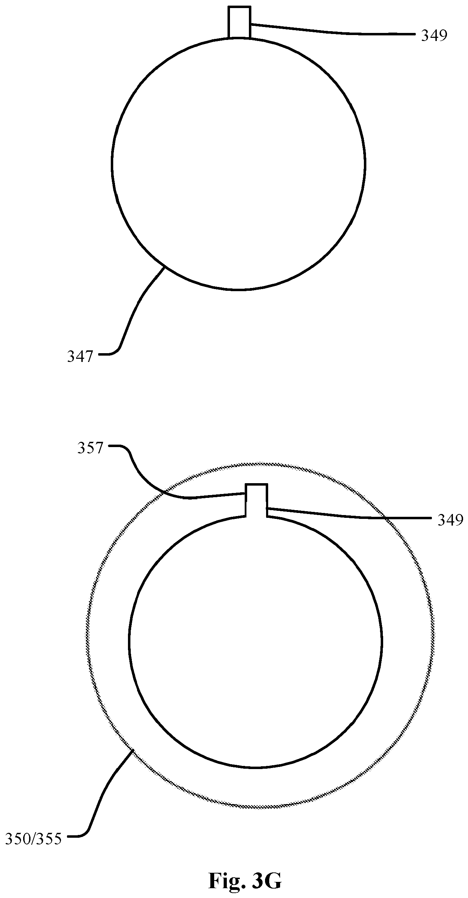

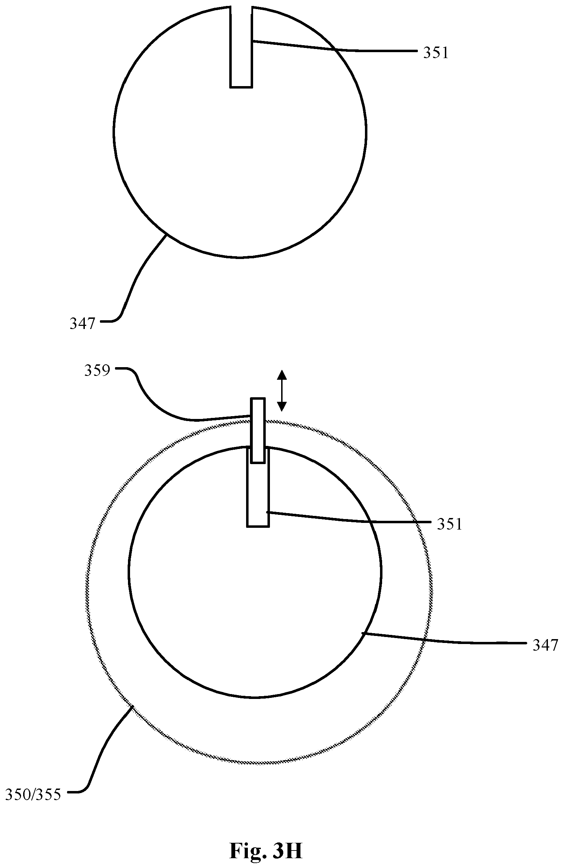

Fig. 3A illustrates a perspective view of a sampling device 300 according to at least one example embodiment. Fig. 3B illustrates another perspective view of the sampling device in Fig. 3A. Fig. 3C illustrates a schematic top view of the support surface 310. Fig. 3D illustrates a side view of the sampling device in Fig. 3A according to at least one example embodiment. Fig. 3E illustrates yet another side view of the sampling device in Fig. 3A according to at least one example embodiment. Figs. 3G and 3H illustrate different clutch mechanisms of the sampling device in in Figs. 3A-3F according to at least one example embodiment.

As noted above, the sampling device 300 may be insertable/deployable from the payload section 105 of the body 103. With reference to Figs. 3A and 3B, the sampling device 300 may include a first section 305 that includes a support surface 310 for supporting one or more sampling components that collect samples (e.g., soil samples) from a landing surface. These components are discussed in more detail below. As shown, the sampling device 300 may include a second section 315 coupled to the first section 305. Here, it should be understood that the first section 305 and the second section 315 may be different sections of a same unitary structure, such as a single frame or single housing (as shown), or formed as separate sections before being joined (e.g., by welding). The second section 315 is separated from the first section 305 by the support surface 310. The second section 315 includes a hollow portion 317 (see Fig. 3B).

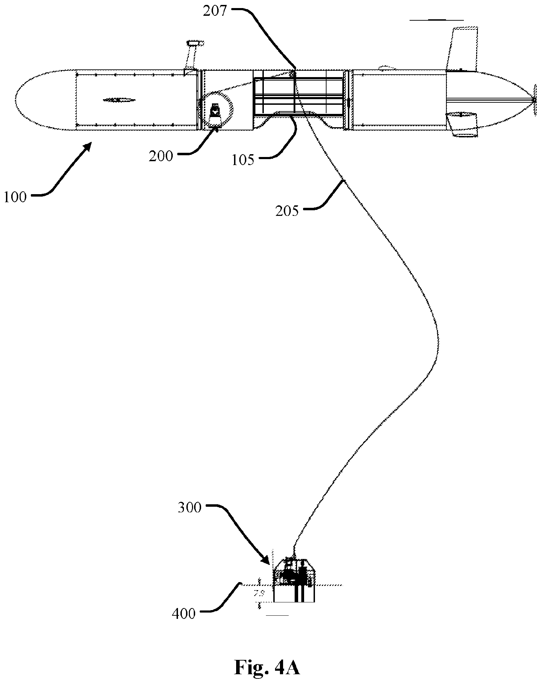

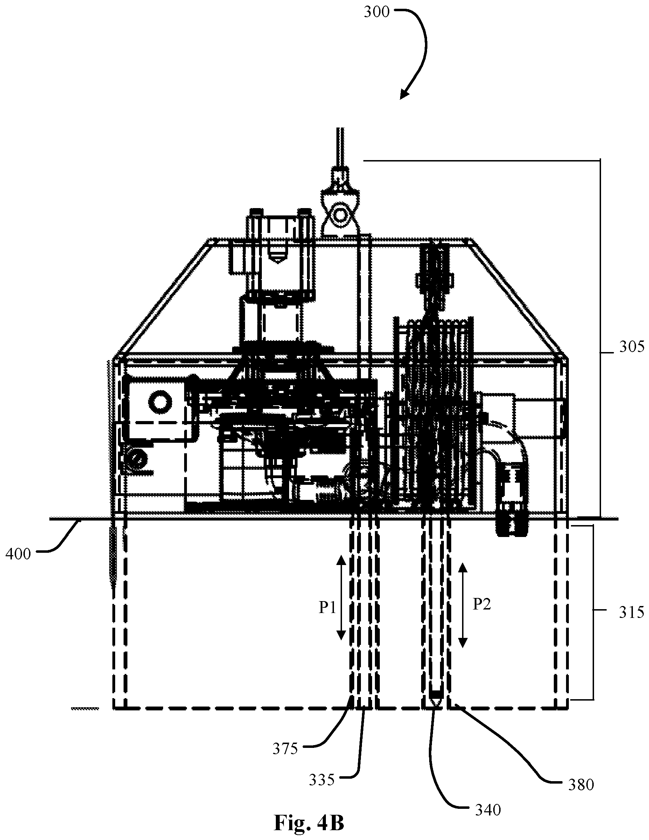

The sampling device 300 includes a pump 320 mounted to the support surface 310 (in any know manner) and in fluid communication with the hollow portion 317. The pump 320 is configured to pump fluid from the hollow portion 317 to an external environment (e.g., a surrounding water environment) to create a suction force to assist with anchoring the second section 315 to the landing surface. Figs. 4A and 4B illustrate the anchoring operation in more detail. When it is desired to release the sampling device 300 from the landing surface, the pump 320 pumps fluid from the external environment to the hollow portion 317 to assist with releasing the second section 317 from the landing surface.

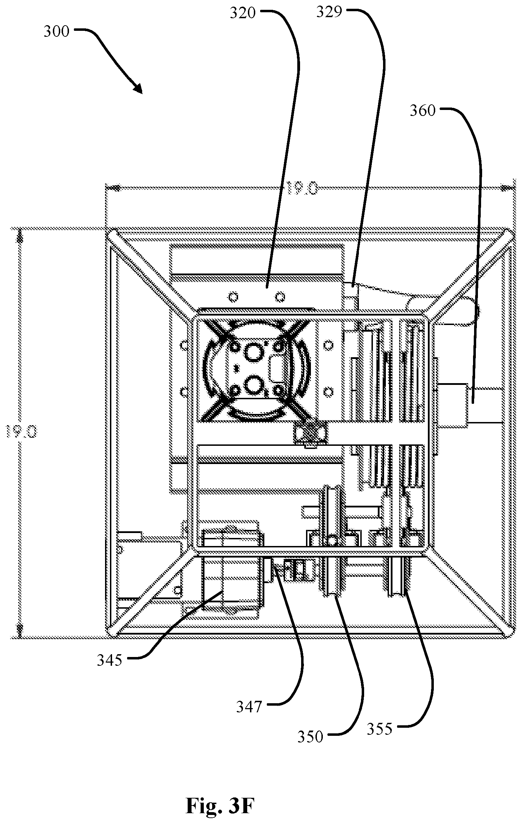

Figs. 3A and 3B further illustrate a hollow tube 325 connected between the pump 320 and the hollow portion 317 to provide the fluid communication through an opening 323 in the support surface 310. One end of the hollow tube 325 may be fixed to the support surface 310 with a tube fitting 327 (e.g., a screw fitting). The other end of the hollow tube 325 may be connected to an inlet/outlet of the pump 320 in the same manner by tube fitting 329 (see Fig. 3F). According to at least one example embodiment, the pump 320 may selectively provide access to the hollow tube 325. For example, the pump 320 includes a valve to provide the selective access. Here, it should be understood that the valve is open when the pump 320 is pumping fluid into and out of the hollow portion 317 and closed when the pump 320 is not in operation (e.g., while the sampling device 300 is anchored).

The first section 305 includes a lift point 330 that attaches to a tether (e.g., the umbilical cable 205 in Fig. 2) for raising and lowering of the sampling device 300 and/or for communicating with the underwater vehicle 100.

As shown in Fig. 3A, the support surface 310 supports one or more sampling components for collecting samples. The one or more sampling components may include a first sampling tool 335, a second sampling tool 340, a friction drive device 345, a first set of rollers 350, a second set of rollers 355, a winch device 360, a first pulley 370, a second pulley 375. The friction drive device 345, the sets of rollers 350/355, and the winch device 360 may be mounted to the support surface 310 in any known manner (e.g., with brackets, bolts, etc.). The pulleys 370/375 may be mounted to an upper frame portion of the first section 305 in any known manner.

The first sampling tool 335 and/or the second sampling tool 340 may be at least one of a cone penetration test (CPT) tool and a core sampling tool for collecting soil samples from the landing surface.

The friction drive device (or assembly) 345 and the winch device (or assembly) 360 are devices that move the first and second sampling tools 335/340 along their respective sampling paths P1/P2. Each device 345/360 may include a motor (e.g., a DC motor) for enabling the movement.

The friction drive device 345 may include a driving rod 347 that passes through and engages with at least one of the rollers (e.g., outer roller in set 350) to cause rotation of the that roller. With reference to roller set 350, the friction between the sampling tool 335, the roller having the driving rod, and the other roller is such that rotation of the roller by the driving rod 347 in a desired direction causes movement of the sampling tool 335 along the sampling path P1.

The friction drive device 345 may include a clutch mechanism to select either the first sampling tool 335 or the second sampling tool 340 for penetration into the landing surface. In this case, it should be understood that a driving rod 347 of the friction drive device passes through one roller in each set of rollers (e.g., the outer roller in each set) 350/355. With reference to Fig. 3G, in at least one example embodiment, the driving rod 347 may be movable parallel to the support surface 310 and may include a key mechanism 349 on the driving rod 347 that engages with a corresponding key hole 357 in a respective outer roller of each set 350/355. In this case, the key mechanism 349 is controlled to slide into a key hole 357 of a selected outer roller to enable selection of one of the sampling tools 335/340 for movement along the sampling paths P1/P2. Additionally or alternatively, as shown in Fig. 3H, the driving rod 347 includes two key holes 351 (only one shown) that permanently sit in selective communication with respective keys 359 of the outer roller in each set of rollers 350/355. Here, the keys 359 of each outer roller may be selectively movable in and out of respective key holes 351 (e.g., as a result of control signals from the underwater vehicle 100) to enable selection of one or both of the outer rollers of each set 350/355, thereby enabling movement of the sampling tools 335/340 along the sampling paths P1/P2. Example embodiments are not limited to the above described clutch mechanism designs as any suitable clutch mechanism could be used according to design preferences. For example, the clutch mechanism may be implemented via spring actuated engagement. In at least one other example embodiment, the clutch mechanism may be an axially-moving engagement mechanism on the driving rod 347. In at least one example embodiment, two friction drive devices 345 may be included, one friction drive device for driving each sampling tool 335/340 in the same manner as described above. In this case, the clutch mechanism may be omitted from both friction drive devices 345.

The winch device 360 may include coil tubing 385 that is connected to one end of the sampling tool 340 to guide the sampling tool 340 along the sampling path P2 while the friction drive device 345 causes movement of the sampling tool 340 via the outer roller in the set 355. That is, unwinding of the coil tubing 385 by the winch device 360 in combination with downward force from the friction drive device 345 allows downward movement of the sampling tool 340 to penetrate the landing surface, and winding of the coil tubing 385 in combination with force from the friction drive device 345 by the winch device 360 allows the sampling tool 340 to retract from the landing surface. Here, it should be understood that the length of coil tubing 385 sets a maximum depth at which the sampling tool 340 can penetrate the landing surface.

The first and second sets of rollers 350/355 may be for guiding and/or moving a respective sampling tool 335/340 along a respective sampling path P1/P2. The rollers 350/355 may be mounted to the support surface 310 by respective brackets (not labeled).

The pulleys 365 and 370 may be associated with the winch device 360 to receive the coil tubing 385.

With reference to Fig. 3C, the support surface 310 includes a first opening 373 and a second opening 377 adjacent to and offset from the first opening 373. According to one example embodiment, the openings 373 and 377 are aligned with one another so as to be aligned with a driving rod of the friction drive device 345. With reference to Figs. 3B and 3C, the sampling device 300 includes a first passageway 375 in communication with the first opening 377 and that extends from support surface 310 (e.g., a bottom of the support surface) into the second section 315. Similarly, a second passageway 380 is in communication with the second opening 377 and that extends from the support surface 310 into the second section 315. Here, it should be understood that the passageways 375 and 380 may be comprised of hollow tubes that are mounted to the support surface 310 in a same manner as the hollow tube 325 (e.g., with a screw tube fitting).

As shown in Fig. 3B, the first sampling tool 335 is guidable along a first sampling path P1 through the first passageway 375 to penetrate the landing surface. Likewise, the second sampling tool 340 is guidable along a second sampling path P2 through the second passageway 380 to penetrate the landing surface.

As shown in Fig. 3D, a height of the second section 315 may be about 8.1 inches, and a total height of the sampling device may be about 22.5 inches. Thus, a height of the first section 305 may be about 14.4 inches. A height from the bottom of the second section 315 to a top of the pump 320 is about 20.7 inches, while a height from the bottom of the second section 315 to a top of a frame of the sampling device 300 is about 19.5 inches.

As shown in the top view of Fig. 3F, the sampling device may be substantially square with lengths and widths of about 19.0 inches each.

It should be understood that example embodiments are not limited to the specific types and/or number of components shown and discussed herein. For example, the sampling device 300 may include any number and/or type of sampling tools, pumps, and devices for moving the sampling tools according to design preferences.

Fig. 4A illustrates deployment and anchoring of the sampling device of Figs. 3A-3E according to at least one example embodiment. Fig. 4B illustrates the anchored the sampling device of Fig. 4A according to at least one example embodiment.

As shown in Figs. 4A and 4B, the sampling device 300 is deployed from the payload section 105 of the underwater vehicle 100 and lands on a landing surface 400 (e.g., a soft seabed). Upon landing, the pump 320 is controlled (e.g., by the underwater vehicle 100 via control signals from the umbilical cable 205) to pump fluid from the hollow portion 317 to the external environment to create a suction force to assist with anchoring the second section 315 to the landing surface 400. For example, the suction force is such that the second section 315 sinks into the landing surface 400 to anchor the underwater vehicle 100. The sampling device 300 is then ready to collect samples with the sampling tools 375/380, if desired. Figs. 4A and 4B show an example where the second section 315 sinks to a depth of about 7.9 inches. When the sampling device 300 is ready to be released from the landing surface, the pump 320 pumps fluid from the external environment to the hollow portion 317 to assist with releasing the second section 315 from the landing surface 400.

Here, it should be understood that the sampling tools 335/340 may be in a retracted position in the passageways 375/380 prior to landing on the landing surface 400. After anchoring to the landing surface 400, the sampling tools 335 and/or 340 may be extended to penetrate the landing surface 400. Fig. 4B shows the extended position of the sampling tools 335/340. Although Fig. 4B shows that the sampling tools 335/340 do not extend beyond a bottom surface of the second section 315, it should be understood that this may occur if desired. Alternatively, the sampling tools 335/340 are placed into their extended position before anchoring to the landing surface 400, for example, while descending toward the landing surface 400 from the underwater vehicle 100.

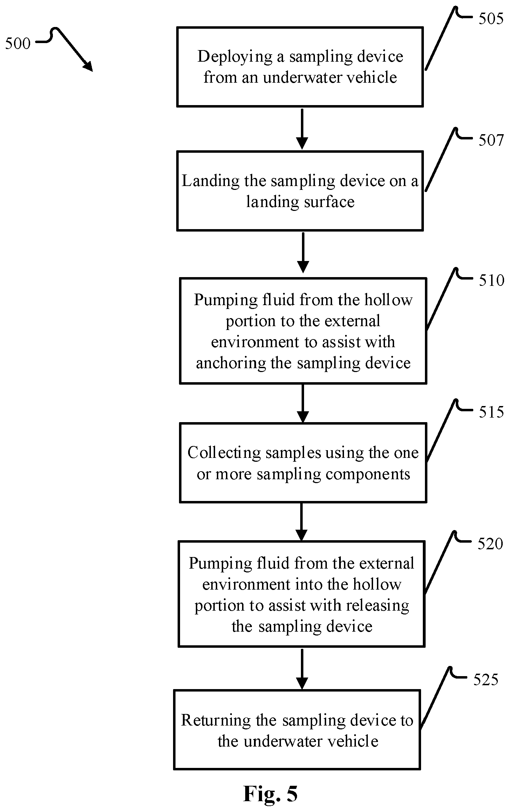

Fig. 5 illustrates a method 500 according to at least one example embodiment. While a general order for the steps of the method 500 is shown in Fig. 5, the method 500 can include more or fewer steps or can arrange the order of the steps differently than those shown in Fig. 5. Generally, the method 500 starts at operation 505 and ends at operation 525. The method 500 can be executed as a set of computer-executable instructions executed by one or more processors (e.g., microprocessor(s) of the underwater vehicle 100) and encoded or stored on a computer readable medium (e.g., a nonvolatile memory). Hereinafter, the method 500 shall be explained with reference to the systems, components, assemblies, devices, user interfaces, environments, software, etc. described in conjunction with Figs. 1-4B.

In operation 505, the method 500 includes deploying a sampling device 300 from an underwater vehicle 100, for example, via the umbilical reel and cable 200/205. As discussed above, the sampling device 300 may include a first section 305 that includes a support surface 310 for supporting one or more sampling components that collect samples from a landing surface 400. The sampling device 300 may include a second section 315 coupled to the first section 305 and separated from the first section by the support surface 310. The second section includes a hollow portion 317. The sampling device 300 may include a pump in fluid communication with the hollow portion 317.

In operation 507, the method 500 includes landing the sampling device 300 on the landing surface 400.

In operation 510, the method 500 includes pumping (by the pump 320) fluid from the hollow portion 317 to an external environment to create a suction force to assist with anchoring the second section 315 to the landing surface 400.

In operation 515, the method 500 includes collecting samples (e.g., soil samples) using the one or more sampling components (e.g., one or both of the sampling tools 335/340).

In operation 520, the method 500 includes pumping (by the pump 320) fluid from the external environment to the hollow portion 317 to assist with releasing the second section 315 from the landing surface 400.

In operation 525, the method 500 includes returning the sampling device 300 to the underwater vehicle 100, for example, by reeling in the sampling device 300 with the umbilical reel and cable 200/205.

Specific details were given in the description to provide a thorough understanding of example embodiments. However, it will be understood by one of ordinary skill in the art that example embodiments may be practiced without these specific details. In other instances, well-known circuits, processes, algorithms, structures, and techniques may be shown without unnecessary detail in order to avoid obscuring the embodiments.

While illustrative embodiments of the disclosure have been described in detail herein, it is to be understood that the inventive concepts may be otherwise variously embodied and employed, and that the appended claims are intended to be construed to include such variations, except as limited by the prior art.

It should be understood that the terms "first," "second," "third," etc. are used for convenience of description and do not limit example embodiments. For example, a particular element may be referred to a "first" element in some cases, and a "second" element in other cases without limiting example embodiments.

The term "a" or "an" entity refers to one or more of that entity. As such, the terms "a" (or "an"), "one or more" and "at least one" can be used interchangeably herein. It is also to be noted that the terms "comprising", "including", and "having" can be used interchangeably. The term "automatic" and variations thereof, as used herein, refers to any process or operation, which is typically continuous or semi-continuous, done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

The phrases "at least one," "one or more," "or," and "and/or" are open-ended expressions that are both conjunctive and disjunctive in operation. For example, each of the expressions "at least one of A, B and C," "at least one of A, B, or C," "one or more of A, B, and C," "one or more of A, B, or C," "A, B, and/or C," and "A, B, or C" means A alone, B alone, C alone, A and B together, A and C together, B and C together, or A, B and C together.

The term "automatic" and variations thereof, as used herein, refers to any process or operation, which is typically continuous or semi-continuous, done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

Aspects of the present disclosure may take the form of an embodiment that is entirely hardware, an embodiment that is entirely software (including firmware, resident software, micro-code, etc.) or an embodiment combining software and hardware aspects that may all generally be referred to herein as a "circuit," "module," or "system." Any combination of one or more computer-readable medium(s) may be utilized. The computer-readable medium may be a computer-readable signal medium or a computer-readable storage medium.

A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer-readable storage medium may be any tangible medium that can contain or store a program for use by or in connection with an instruction execution system, apparatus, or device.

A computer-readable signal medium may include a propagated data signal with computer-readable program code embodied therein, for example, in baseband or as part of a carrier wave. Such a propagated signal may take any of a variety of forms, including, but not limited to, electro-magnetic, optical, or any suitable combination thereof. A computer-readable signal medium may be any computer-readable medium that is not a computer-readable storage medium and that can communicate, propagate, or transport a program for use by or in connection with an instruction execution system, apparatus, or device. Program code embodied on a computer-readable medium may be transmitted using any appropriate medium, including, but not limited to, wireless, wireline, optical fiber cable, RF, etc., or any suitable combination of the foregoing.

The terms "determine," "calculate," "compute," and variations thereof, as used herein, are used interchangeably and include any type of methodology, process, mathematical operation or technique.

## Claims

1. A sampling device (300) for underwater environments, comprising:
a first section (305) that includes a support surface for supporting one or more sampling components that collect samples from a landing surface;
a second section (315) coupled to the first section and separated from the first section by the support surface, the second section including a hollow portion (317);
a pump (320) in fluid communication with the hollow portion and configured to i) pump fluid from the hollow portion to an external environment to create a suction force to assist with anchoring the second section to the landing surface, and ii) pump fluid from the external environment to the hollow portion to assist with releasing the second section from the landing surface;
a first sampling tool (335) that is guidable along a first sampling path to penetrate the landing surface; **characterized by**
a second sampling tool (340) that is guidable along a second sampling path to penetrate the landing surface; and
a first device (345) that selects either the first sampling tool or the second sampling tool for penetration into the landing surface.

2. The sampling device of claim 1, further comprising:
a hollow tube (325) connected between the pump and the hollow portion to provide the fluid communication, wherein the pump includes a valve that selectively provides the pump access to the hollow tube.

3. The sampling device of claim 1 or 2, wherein the first section includes a lift point (330) that attaches to a tether for controlling raising and lowering of the sampling device.

4. The sampling device according to any one of the preceding claims, wherein the one or more sampling components further comprises:
a first opening (320) in the support surface; and
a first passageway (375) in communication with the first opening and that extends from support surface into the second section, wherein the first sampling path is through the first passageway.

5. The sampling device according to any one of the preceding claims, wherein the first sampling tool is one of a cone penetration test (CPT) tool or a core sampling tool, and wherein the second sampling tool is the other one of the CPT tool or the core sampling tool.

6. The sampling device according to any one of the preceding claims, wherein the first device includes a friction drive device that includes a motor, a first set of rollers for moving the first sampling tool along the first sampling path, and a second set of rollers for moving the second sampling tool along the second sampling path.

7. The sampling device according to any one of the preceding claims, wherein the one or more sampling components further comprises:
a winch device (360) including coil tubing connected to the second sampling tool to control a maximum depth of the second sampling tool into the landing surface.

8. The sampling device of claim 4, wherein the one or more sampling components further comprises:
a second opening (377) in the support surface adjacent to the first opening; and
a second passageway (380) in communication with the second opening and that extends from support surface into the second section, wherein the second sampling path is through the second passageway.

9. The sampling device of claim 8, wherein the first opening and the second opening are aligned with one another on the support surface.

10. The sampling device of claim 8, wherein the first sampling tool and the second sampling tool are at least one of a cone penetration test (CPT) tool and a core sampling tool.

11. The sampling device of claim 8, wherein the first device includes a friction drive device that includes a motor and a clutch mechanism that selects either the first sampling tool or the second sampling tool for penetration into the landing surface.

12. The sampling device of claim 11, wherein the friction drive device includes a first set of rollers, and a second set of rollers offset from the first set of rollers, wherein the clutch mechanism allows the friction drive device to engage with a roller in the first set of rollers to move the first sampling tool along the first sampling path, and wherein the clutch mechanism allows the friction drive device to engage with a roller in the second set of rollers to move the second sampling tool along the second sampling path.

13. The sampling device of claim 12, further comprising:
a second device for guiding the second sampling tool along the second sampling path and for setting a maximum depth of the second sampling tool.

14. The sampling device of claim 12, wherein the clutch mechanism comprises:
a rod that is movable parallel to the support surface; and
a key mechanism that engages with a corresponding key hole on the roller in the first set of rollers and with a corresponding key hole on the roller in the second set of rollers.

15. An underwater vehicle, comprising:
a body including a payload section;
one or more devices attached to the body and that control the underwater vehicle; and the sampling device of claim 1.

## Patentansprüche

1. Probenahmevorrichtung (300) für Unterwasserumgebungen, wobei die Probenahmevorrichtung (300) Folgendes aufweist:
einen ersten Abschnitt (305), der eine Auflagefläche zum Tragen von einer oder mehreren Probenahmekomponenten enthält, die Proben von einer Landefläche sammeln;
einen zweiten Abschnitt (315), der mit dem ersten Abschnitt gekoppelt ist und der vom ersten Abschnitt durch die Auflagefläche getrennt ist, wobei der zweite Abschnitt einen hohlen Teil (317) aufweist;
eine Pumpe (320), die fluidisch mit dem hohlen Abschnitt in Verbindung steht und die so konfiguriert ist, dass sie i) Fluid aus dem hohlen Teil in eine äußere Umgebung pumpt, um eine Saugkraft zu erzeugen, die die Verankerung des zweiten Abschnitts an der Landefläche unterstützt, und ii) Fluid aus der äußeren Umgebung in den hohlen Teil pumpt, um das Lösen des zweiten Abschnitts von der Landefläche zu unterstützen;
ein erstes Probenahmewerkzeug (335), das entlang eines ersten Probenahmeweges geführt werden kann, um die Landefläche zu durchdringen; **gekennzeichnet durch**
ein zweites Probenahmewerkzeug (340), das entlang eines zweiten Probenahmeweges geführt werden kann, um die Landefläche zu durchdringen; und
eine erste Vorrichtung (345), die entweder das erste Probenahmewerkzeug oder das zweite Probenahmewerkzeug zum Eindringen in die Landefläche auswählt.

2. Probenahmevorrichtung nach Anspruch 1, ferner aufweisend:
ein hohles Rohr (325), das zwischen der Pumpe und dem hohlen Teil angeschlossen ist, um die fluidische Verbindung herzustellen, wobei die Pumpe ein Ventil aufweist, das der Pumpe selektiv Zugang zu dem hohlen Rohr verschafft.

3. Probenahmevorrichtung nach Anspruch 1 oder 2, wobei der erste Abschnitt einen Hebepunkt (330) aufweist, der an einem Halteseil befestigt werden kann, um das Anheben und das Absenken der Probenahmevorrichtung zu steuern.

4. Probenahmevorrichtung nach einem der vorhergehenden Ansprüche, wobei die eine oder die mehreren Probenahmekomponenten ferner aufweisen:
eine erste Öffnung (320) in der Auflagefläche; und
einen ersten Durchgang (375), der mit der ersten Öffnung in Verbindung steht und der sich von der Auflagefläche in den zweiten Abschnitt erstreckt, wobei der erste Probenahmeweg durch den ersten Durchgang verläuft.

5. Probenahmevorrichtung nach einem der vorhergehenden Ansprüche, wobei das erste Probenahmewerkzeug entweder ein Werkzeug für die Drucksondierung (Cone Penetration Test, CPT) oder ein Werkzeug für Kernbohrungen ist und wobei das zweite Probenahmewerkzeug das andere Werkzeug aus der Gruppe der Werkzeuge ist, die ein Werkzeug für die Drucksondierung (Cone Penetration Test, CPT) und ein Werkzeug für Kernbohrungen umfasst.

6. Probenahmevorrichtung nach einem der vorhergehenden Ansprüche, wobei die erste Vorrichtung eine Reibungsantriebsvorrichtung aufweist, die einen Motor, einen ersten Satz von Rollen zum Bewegen des ersten Probenahmewerkzeugs entlang des ersten Probenahmeweges und einen zweiten Satz von Rollen zum Bewegen des zweiten Probenahmewerkzeugs entlang des zweiten Probenahmeweges aufweist.

7. Probenahmevorrichtung nach einem der vorhergehenden Ansprüche, wobei die eine oder die mehreren Probenahmekomponenten ferner Folgendes aufweisen:
eine Windenvorrichtung (360), die ein Spiralrohr aufweist, das mit dem zweiten Probenahmewerkzeug verbunden ist, um eine maximale Tiefe des zweiten Probenahmewerkzeugs in der Landefläche zu steuern.

8. Probenahmevorrichtung nach Anspruch 4, wobei die eine oder die mehreren Probenahmekomponenten ferner Folgendes aufweisen:
eine zweite Öffnung (377) in der Auflagefläche neben der ersten Öffnung; und
einen zweiten Durchgang (380), der mit der zweiten Öffnung in Verbindung steht und der sich von der Auflagefläche in den zweiten Abschnitt erstreckt, wobei der zweite Probenahmeweg durch den zweiten Durchgang verläuft.

9. Probenahmevorrichtung nach Anspruch 8, wobei die erste Öffnung und die zweite Öffnung auf der Auflagefläche miteinander ausgerichtet sind.

10. Probenahmevorrichtung nach Anspruch 8, wobei das erste Probenahmewerkzeug und das zweite Probenahmewerkzeug wenigstens eines von einem Werkzeug für die Drucksondierung (Cone Penetration Test, CPT) und einem Werkzeug für Kernbohrungen sind.

11. Probenahmevorrichtung nach Anspruch 8, wobei die erste Vorrichtung eine Reibungsantriebsvorrichtung aufweist, die einen Motor und einen Kupplungsmechanismus aufweist, der entweder das erste Probenahmewerkzeug oder das zweite Probenahmewerkzeug zum Eindringen in die Landefläche auswählt.

12. Probenahmevorrichtung nach Anspruch 11, wobei die Reibungsantriebsvorrichtung einen ersten Satz von Rollen und einen zweiten Satz von Rollen aufweist, der in Bezug auf den ersten Satz von Rollen versetzt ist, wobei der Kupplungsmechanismus es der Reibungsantriebsvorrichtung ermöglicht, mit einer Rolle in dem ersten Satz von Rollen in Eingriff zu kommen, um das erste Probenahmewerkzeug entlang des ersten Probenahmeweges zu bewegen, und wobei der Kupplungsmechanismus es der Reibungsantriebsvorrichtung ermöglicht, mit einer Rolle in dem zweiten Satz von Rollen in Eingriff zu kommen, um das zweite Probenahmewerkzeug entlang des zweiten Probenahmeweges zu bewegen.

13. Probenahmevorrichtung nach Anspruch 12, ferner aufweisend:
eine zweite Vorrichtung zum Führen des zweiten Probenahmewerkzeugs entlang des zweiten Probenahmeweges und zum Einstellen einer maximalen Tiefe des zweiten Probenahmewerkzeugs.

14. Probenahmevorrichtung nach Anspruch 12, wobei der Kupplungsmechanismus Folgendes aufweist:
eine Stange, die parallel zu der Auflagefläche bewegt werden kann; und
einen Schlüsselmechanismus, der mit einem entsprechenden Schlüsselloch an der Rolle in dem ersten Satz von Rollen und mit einem entsprechenden Schlüsselloch an der Rolle in dem zweiten Satz von Rollen zum Eingriff kommt.

15. Unterwasserfahrzeug, wobei das Unterwasserfahrzeug Folgendes aufweist:
einen Körper, der einen Nutzlastabschnitt aufweist;
eine Vorrichtung oder mehrere Vorrichtungen, die an dem Körper befestigt ist / sind und die das Unterwasserfahrzeug steuert / steuern; und
eine Probenahmevorrichtung nach Anspruch 1.

## Revendications

1. Dispositif d'échantillonnage (300) pour les environnements sous-marins, dans lequel le dispositif d'échantillonnage (300) comprend :
une première section (305) qui comprend une surface de support pour supporter un composant d'échantillonnage ou une pluralité de composants d'échantillonnage qui recueille ou recueillent des échantillons à partir d'une surface d'atterrissage ;
une deuxième section (315) couplée à la première section et séparée de la première section par la surface de support, dans lequel la deuxième section comprend une partie creuse (317) ;
une pompe (320) en communication fluidique avec la partie creuse et configurée pour i) pomper le fluide de la partie creuse vers un environnement extérieur afin de créer une force d'aspiration pour aider à ancrer la deuxième section à la surface d'atterrissage, et ii) pomper le fluide de l'environnement extérieur vers la partie creuse pour aider à détacher la deuxième section de la surface d'atterrissage ;
un premier outil d'échantillonnage (335) qui peut être guidé le long d'une première trajectoire d'échantillonnage pour pénétrer dans la surface d'atterrissage ; **caractérisé par**
un deuxième outil d'échantillonnage (340) qui peut être guidé le long d'une deuxième trajectoire d'échantillonnage pour pénétrer dans la surface d'atterrissage ; et
un premier dispositif (345) qui sélectionne soit le premier outil d'échantillonnage, soit le deuxième outil d'échantillonnage pour pénétrer dans la surface d'atterrissage.

2. Dispositif d'échantillonnage selon la revendication 1, comprenant en outre :
un tube creux (325) relié entre la pompe et la partie creuse pour assurer la communication fluidique, dans lequel la pompe comprend une valve qui donne à la pompe l'accès au tube creux d'une manière sélective.

3. Dispositif d'échantillonnage selon la revendication 1 ou 2, dans lequel la première section comprend un point de levage (330) qui s'attache à une longe pour contrôler la montée et la descente du dispositif d'échantillonnage.

4. Dispositif d'échantillonnage selon l'une quelconque des revendications précédentes, dans lequel le composant d'échantillonnage ou une pluralité des composants d'échantillonnage comprend ou comprennent en outre :
une première ouverture (320) dans la surface de support ; et
un premier passage (375) en communication avec la première ouverture et qui s'étend de la surface de support à la deuxième section, dans lequel la première trajectoire d'échantillonnage passe par le premier passage.

5. Dispositif d'échantillonnage selon l'une quelconque des revendications précédentes, dans lequel le premier outil d'échantillonnage est un outil de l'essai de pénétromètre statique (cone penetration test, CPT) ou un outil d'échantillonnage de carottes, et dans lequel le deuxième outil d'échantillonnage est l'autre d'un groupe qui est composé d'un outil de l'essai de pénétromètre statique (cone penetration test, CPT) et un outil d'échantillonnage de carottes.

6. Dispositif d'échantillonnage selon l'une quelconque des revendications précédentes, dans lequel le premier dispositif comprend un dispositif d'entraînement par friction qui comprend un moteur, un premier ensemble de rouleaux pour déplacer le premier outil d'échantillonnage le long de la première trajectoire d'échantillonnage, et un deuxième ensemble de rouleaux pour déplacer le deuxième outil d'échantillonnage le long de la deuxième trajectoire d'échantillonnage.

7. Dispositif d'échantillonnage selon l'une quelconque des revendications précédentes, dans lequel le composant d'échantillonnage ou une pluralité des composants d'échantillonnage comprend ou comprennent en outre :
un dispositif de treuil (360) qui comprend un tube hélicoïdal qui est relié au deuxième outil d'échantillonnage pour contrôler la profondeur maximale du deuxième outil d'échantillonnage dans la surface d'atterrissage.

8. Dispositif d'échantillonnage selon la revendication 4, dans lequel le composant d'échantillonnage ou une pluralité des composants d'échantillonnage comprend ou comprennent en outre :
une deuxième ouverture (377) dans la surface de support adjacente à la première ouverture ; et
un deuxième passage (380) en communication avec la deuxième ouverture et qui s'étend de la surface de support à la deuxième section, dans lequel la deuxième trajectoire d'échantillonnage passe par le deuxième passage.

9. Dispositif d'échantillonnage selon la revendication 8, dans lequel la première ouverture et la deuxième ouverture sont alignées l'une avec l'autre sur la surface de support.

10. Dispositif d'échantillonnage selon la revendication 8, dans lequel le premier outil d'échantillonnage et le deuxième outil d'échantillonnage sont au moins un outil de l'essai de pénétromètre statique (cone penetration test, CPT) ou un outil d'échantillonnage de carottes.

11. Dispositif d'échantillonnage selon la revendication 8, dans lequel le premier dispositif comprend un dispositif d'entraînement par friction qui comprend un moteur et un mécanisme d'embrayage qui sélectionne soit le premier outil d'échantillonnage, soit le deuxième outil d'échantillonnage pour la pénétration dans la surface d'atterrissage.

12. Dispositif d'échantillonnage selon la revendication 11, dans lequel le dispositif d'entraînement par friction comprend un premier ensemble de rouleaux et un deuxième ensemble de rouleaux décalés par rapport au premier ensemble de rouleaux, dans lequel le mécanisme d'embrayage permet au dispositif d'entraînement par friction de s'engager avec un rouleau du premier ensemble de rouleaux pour déplacer le premier outil d'échantillonnage le long de la première trajectoire d'échantillonnage, et dans lequel le mécanisme d'embrayage permet au dispositif d'entraînement par friction de s'engager avec un rouleau du deuxième ensemble de rouleaux pour déplacer le deuxième outil d'échantillonnage le long de la deuxième trajectoire d'échantillonnage.

13. Dispositif d'échantillonnage selon la revendication 12, comprenant en outre :
un deuxième dispositif pour guider le deuxième outil d'échantillonnage le long de la deuxième trajectoire d'échantillonnage et pour régler la profondeur maximale du deuxième outil d'échantillonnage.

14. Dispositif d'échantillonnage selon la revendication 12, dans lequel le mécanisme d'embrayage comprend :
une barre qui peut être déplacée d'une manière parallèle par rapport à la surface de support ; et
un mécanisme de clé qui s'engage dans un trou de clé correspondant sur le rouleau du premier ensemble de rouleaux et dans un trou de clé correspondant sur le rouleau du deuxième ensemble de rouleaux.

15. Véhicule sous-marin comprenant :
un corps comprenant une section de charge utile ;
un dispositif ou une pluralité de dispositifs attaché ou attachés au corps et qui contrôle ou contrôlent le véhicule sous-marin ; et
un dispositif d'échantillonnage selon la revendication 1.
